# EUROPÄISCHE PATENTSCHRIFT

(11) **EP 1 040 744 B1**
(45) Veröffentlichungstag und Bekanntmachung des Hinweises auf die Patenterteilung: **18.02.2004**
(21) Anmeldenummer: 00106960.8
(22) Anmeldetag: 27.03.1996
(51) Int. Cl.: A01D 43/00

(54) **Verfahren zum Entfernen von Schadstoffen des Schnittguts beim Mähen von Wiesen**
Method for removing contaminants from grass cuttings during mowing meadows
Procédé pour éliminer des substances nocives pendant le fauchage des prairies

(30) Priorität: 27.03.1995 DE 19511217
(43) Veröffentlichungstag der Anmeldung: 04.10.2000
(62) Teilanmeldung aus: 96909133.9
(73) Patentinhaber: Zündapp Gartentechnik GmbH & Co. Entwicklungs KG, 82234 Wessling (DE)
(72) Erfinder: Specht, Martin, 82340 Feldafing (DE)
(74) Vertreter: Nöth, Heinz, Dipl.-Phys.

(56) Entgegenhaltungen:
- EP-A- 0 526 763
- DE-U- 9 314 423
- FR-A- 2 434 561
- FR-A- 2 503 533
- FR-E- 90 558
- US-A- 4 109 448

## Beschreibung

Die Erfindung betrifft ein Verfahren zum Entfernen von Schadstoffen aus beim Mähen angefallenem Schnittgut.

Aus EP-A-0 526 763 ist ein fahrbarer Rasenmäher bekannt, bei dem sich an eine Schneideinrichtung eine Dehydratisiereinrichtung für das Mähgut anschließt, in welcher auf das Mähgut zum Auspressen von Flüssigkeit ein mechanischer Druck ausgeübt wird. Das Schnittgut wird durch eine Schnecke gemahlen und verdichtet. Dabei wird seine Oberfläche aufgeschlossen, d. h. vergrößert, so dass der Rotte- oder Verrottungsprozess (die Kompostierung) schneller einsetzen und beschleunigt ablaufen kann. Das Schnittgut wird dann mittels einer in einer horizontalen Ebene umlaufenden Streuscheibe in der Umgebung des Mähers ausgestreut. Vorher kann das Schnittgut beispielsweise mit Hilfe eines Häckslers vereinzelt bzw. zerkleinert werden. Der Flüssigkeitsanteil des Schnittgutes wird bei der Verdichtung in der Dehydratisiereinrichtung ausgepresst und kann durch Bohrungen in der Nähe des Auslasses der Dehydratlsieteinrichtung nach unten zum Boden hin austreten.

Aus US-A-4,109,448 ist eine Vorrichtung bekannt, bei welcher das Schnittgut in eine Feststoffphase und eine flüssige Phase getrennt wird. Die Flüssigkeit wird in einem Tank gespeichert und bevor sie in den Boden zurückgeführt wird, zur Entfernung von Proteinen behandelt. Die entfernten Proteine werden in einem Speicherbehälter gesammelt.

Aufgabe der Erfindung ist es, Schadstoffe aus beim Mähen angefallenem Schnittgut zu beseitigen.

Diese Aufgabe wird durch den Patentanspruch gelöst.

Die verwendeten Mähmaschinen können als Handrasenmäher mit Rädern und einem selbsttragendem Gehäuse, z. B. aus Aluminiumguß, ausgeführt sein. Mehrere Mähmaschinen können in einem Tragrahmen eingebaut sein, um eine größere Mähbreite in einem Arbeitsgang zu erzielen. Es können jeweils eigene Antriebe vorhanden sein (Elektro- oder Verbrennungsmotor) oder ein Tragrahmen kann hinter einer Zugmaschine gezogen werden, wobei von dieser die Mähmaschinen angetrieben werden.

Zweckmäßigerweise ist ein zusätzliche Speichereinrichtung zum Speichern der ausgepreßten Flüssigkeit vorgesehen. Bei schadstoffbelasteten Wiesen wird eine Entgiftung vorgenommen, wenn die aus dem Schnittgut ausgepreßte und die Schadstoffe enthaltende Flüssigkeit während dem Mähen gespeichert und anschließend kontrolliert abgeführt wird.

Nachfolgend wird die Erfindung unter Bezugnahme auf Zeichnungen weiter erläuert.

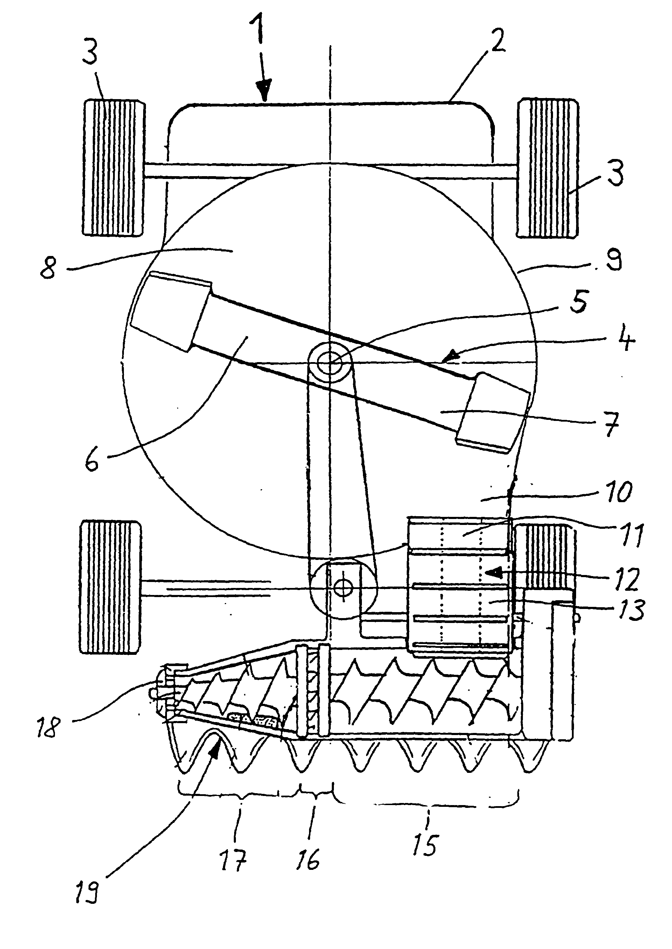

In der Figur ist eine Mähmaschine als Handrasenmäher schematisch mit seinen wesentlichen Komponenten dargestellt. Der Rasenmäher 1 weist ein selbsttragendes Gehäuse 2 und vier Räder 3 auf. In dem Gehäuse 2 ist ein Schneidmesser 4 auf einer zentralen Lagerwelle mit vertikaler Rotationsachse 5 drehbar gelagert. Das Schneidmesser 4 ist beispielhaft mit zwei Flügeln 6, 7 dargestellt, kann jedoch auch drei- oder mehrflügelig sein. Das Schneidmesser 4 ist mit einem Elektro- oder Verbrennungsmotor (nicht dargestellt) gekoppelt und durch diesen antreibbar. Der Antriebsmotor kann koaxial zur Rotationsachse 5 am Gehäuse 2 angeordnet und mit der Lagerwelle des Schneidmessers 4 direkt verbunden sein.

Das Gehäuse 2 bildet eine Abdeckung 9 eines Schneidraumes 8, in dem das Schneidmesser 4 rotiert. In der Abdeckung 9 ist eine Auswurföffnung 10 vorgesehen, an die sich ein Förderkanal 11 für das Schnittgut anschließt. Im Förderkanal 11 ist eine Schnittgutfördereinrichtung 12 angeordnet, die ein oberes und ein unteres Förderband 13 aufweist. Die Förderbänder 13 sind in Förderrichtung gegeneinander geneigt angebracht, so daß der Querschnitt des Förderkanals 11, der in etwa parallele Seitenwände aufweist, in Förderrichtung abnimmt.

Anschließend an den Förderkanal 11 ist eine Verdichtereinheit 15 angeordnet, die das Schnittgut unter weiterer Verdichtung zu einer Zerkleinerungseinrichtung, z. B. einem Messersatz 16, transportiert, in dem das Schnittgut zerkleinert wird. Eine nachgeordnete Dehydratisierungseinrichtung 17 dient zum zusätzlichen Verdichten des Schnittgutes, wobei dessen Flüssigkeit weitestgehend ausgepreßt wird. Das entfeuchtete Schnittgut wird beim Austritt aus der Dehydratisierungseinrichtung 17 von einem rotierenden Messer 18 abgetrennt und zerkleinert auf dem Boden verteilt. Die ausgepreßte Flüssigkeit wird in einer Ablaufrinne 19 unterhalb der Dehydratisierungseinrichtung 17 gesammelt.

## Patentansprüche

1. Verfahren zum Entfernen von Schadstoffen aus beim Mähen angefallenem Schnittgut, bei dem das Schnittgut in eine Feststoff-Phase und eine flüssige Phase getrennt wird, wobei die schadstoffhaltige Flüssigkeit gespeichert und anschließend kontrolliert abgeführt wird.

## Claims

1. A method of removing contaminants from cut material produced in a mowing operation, in which the cut material is separated into a solid phase and a liquid phase, wherein the contaminant-bearing liquid is stored and then controlledly discharged.

## Revendications

1. Procédé d'élimination de substances polluantes du produit fauché se produisant à la fauchaison, dans lequel on sépare le produit fauché en une phase solide et en une phase liquide, le liquide contenant les substances polluantes étant stocké et ensuite étant évacué de manière contrôlée.
